# EUROPEAN PATENT APPLICATION

(11) **EP 0 667 726 A2**
(43) Date of publication of application: **16.08.1995**
(21) Application number: 95101947.0
(22) Date of filing: 13.02.1995
(51) Int. Cl.: H04Q 7/38, H04B 7/26

(54) **Power control during hand-over in a mobile cellular radio communication system**

(30) Priority: 14.02.1994 JP 17655/94
(71) Applicant: MATSUSHITA ELECTRIC INDUSTRIAL CO., LTD., Kadoma-shi, Osaka 571 (JP)
(72) Inventor: Nagase, Taku, Tokyo (JP)
(74) Representative: Patentanwälte Leinweber & Zimmermann

(57) **Abstract**

A mobile radio communication system in which, at the time of hand-over of a mobile station (11) from a base station (10) having a large cellular radius to another base station (12) having a small cellular radius, a base station control apparatus (14) incorporated for controlling adjacent base stations informs the base station (12) having the small cellular radius of the presence of the mobile station (11) and connects a reverse link of the mobile station (11) to the base station (12) having the small cellular radius. Power control information is transferred from the base station (12) having the small cellular radius to the mobile station (11) through the base station control apparatus (14) and the base station (10) having the large cellular radius, so that the output power of radio waves transmitted from the mobile station (11) can be reduced to a minimum, and the possibility of interference of the transmission power with other paths can also be minimized. Therefore, at the time of hand-over of the mobile station (11) from the base station (10) having the large cellular radius to the base station (12) having the small cellular radius, the transmission power of the mobile station (11) can be reduced to a minimum, and the possibility of interference of the transmission power with the reverse link of the base station (12) having the small cellular radius can also be minimized.

## Description

### BACKGROUND OF THE INVENTION

This invention relates to a mobile radio communication system in which, when a mobile station making radio communication with a base station having a large cellular radius is handed over to another base station having a small cellular radius, the transmitter power of radio waves transmitted from the mobile station is decreased so as to minimize its interference with a reverse link through which another mobile station is making radio communication with the base station having the small cellular radius.

JP-A-4-273622 proposes a technical idea for avoiding such undesirable interference. According to the disclosure of the cited application, the output power of radio waves transmitted from each of a base station having a large cellular radius and a base station having a small cellular radius is suitably increased or decreased to change influenced ranges in the areas covered by the individual base stations, thereby minimizing the undesirable interference. However, the cited application does not disclose any idea of decreasing the output power of radio waves transmitted from a mobile station when the mobile station is handed over from the base station having the large cellular radius to the base station having the small cellular radius.

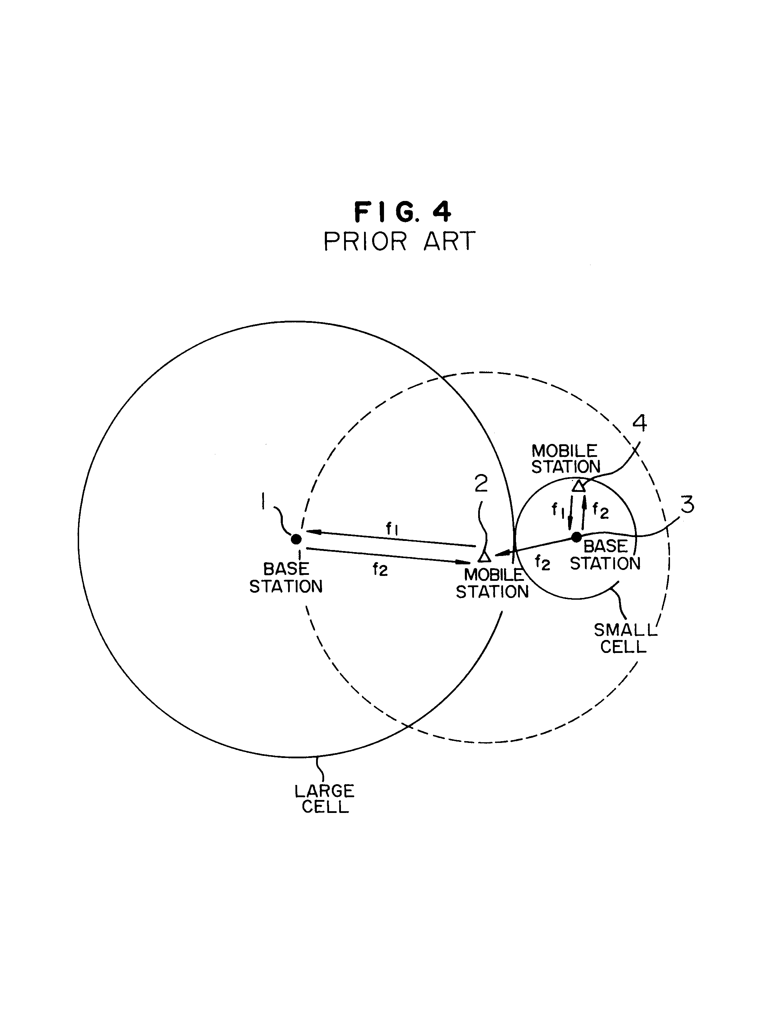

A prior art mobile radio communication system of this kind has generally an arrangement of base and mobile stations as schematically shown in Fig. 4. Referring to Fig. 4, a mobile station 2 is making radio communication with a base station 1 having a large cellular radius, and a frequency f1 is allocated to a reverse link from the mobile station 2 to the base station 1, while another frequency f2 is allocated to a forward link from the base station 1 to the mobile station 2. On the other hand, another mobile station 4 is making radio communication with another base station 3 having a small cellular radius, and similarly the frequency f1 is allocated to an reverse link from the mobile station 4 to the base station 3, while the frequency f2 is allocated to a forward link from the base station 3 to the mobile station 4.

The operation of the prior art mobile radio communication system shown in Fig. 4 will now be described. The cellular radius is determined by the value of the output power of radio waves transmitted from each of the base stations 1 and 3 through their forward links. At the boundary between the cells, the received power level of radio waves transmitted through the forward link from the base station 1 to the mobile station 2 is equal to that of radio waves transmitted through the forward link from the base station 3 to the mobile station 4. In the system shown in Fig. 4, soft hand-over of the mobile station 2 from the base station 1 to the base station 3 is attained by first connecting the forward link of the mobile station 2 to the base station 3 and then connecting the reverse link of the mobile station 2 to the base station 3. As soon as the mobile station 2 is completely connected at both the reverse link and the forward link to the base station 3, the mobile station 2 is disconnected from the base station 1.

### SUMMARY OF THE INVENTION

In the prior art mobile radio communication system shown in Fig. 4, the mobile station 2 continues to make radio communication with the base station 1 having the large cellular radius until the reverse link of the mobile station 2 is connected to the base station 3 at the time of hand-over from the base station 1 having the large cellular radius to the base station 3 having the small cellular radius. Thus, even when the mobile station 2 moving in the vicinity of the boundary between the cells is located nearer to the base station 3 having the small cellular radius than the base station 1 having the large cellular radius, the radio waves transmitted from the mobile station 2 through the reverse link must reach the base station 1 now located remote from the mobile station 2. Therefore, the mobile station 2 is required to transmit the radio waves of a correspondingly high power level, and, in addition, transmission of the radio waves of such high power level from the mobile station 2 interferes greatly with the reverse link of radio communication between the mobile station 4 and the base station 3 having the small cellular radius. Thus, the prior art mobile radio communication system had the problem that a signal cannot be accurately transmitted from the mobile station 4 to the base station 3.

With a view to solve such a prior art problem, it is an object of the present invention to provide a mobile radio communication system in which, at the time of hand-over of a mobile station from a base station having a large cellular radius to another base station having a small cellular radius, the output power of radio waves transmitted from the mobile station is decreased so as to minimize its interference with a reverse link through which another mobile station is making radio communication with the base station having the small cellular radius.

In accordance with the present invention which attains the above object, there is provided a mobile radio communication system comprising base station control means incorporated for the purpose of centralized control of a plurality of adjacent base stations including a base station having a large cellular radius and another base station having a small cellular radius, the base station control means acting, at the time of hand-over of a mobile station from the base station having the large cellular radius to the base station having the small cellular radius, to inform the base station having the small cellular radius of the presence of the mobile station and to connect a reverse link of the mobile station to the base station having the small cellular radius before connecting a forward link of the mobile station to that base station, and the base station control means forming a closed loop together with the mobile station, the base station having the large cellular radius and the base station having the small cellular radius to effect closed loop control of the mobile station so as to suppress the output power of radio waves transmitted from the mobile station to a minimum required level sufficient for the operation of the base station having the small cellular radius, whereby the output power of radio waves transmitted from the mobile station is reduced to a minimum, and the possibility of interference of the transmission power with other paths is minimized.

Therefore, according to the present invention, at the time of hand-over of the mobile station from the base station having the large cellular radius to the base station having the small cellular radius, the reverse link of the mobile station is connected to the base station having the small cellular radius under control of call control means included in the base station control means, and power control information is transferred from the base station having the small cellular radius to the mobile station through power control information transfer means included in the base station control means and the base station having the large cellular radius.

### BRIEF DESCRIPTION OF THE DRAWINGS

Fig. 1 schematically shows an arrangement of base and mobile stations in an embodiment of the mobile radio communication system according to the present invention.
Fig. 2 is a block diagram of the mobile radio communication system embodying the present invention.
Fig. 3 is a signal sequence chart of the operation of the mobile radio communication system embodying the present invention.
Fig. 4 schematically shows an arrangement of base and mobile stations in a prior art mobile radio communication system.

### DESCRIPTION OF THE PREFERRED EMBODIMENTS

Preferred embodiments of the present invention will now be described by reference to the drawings.

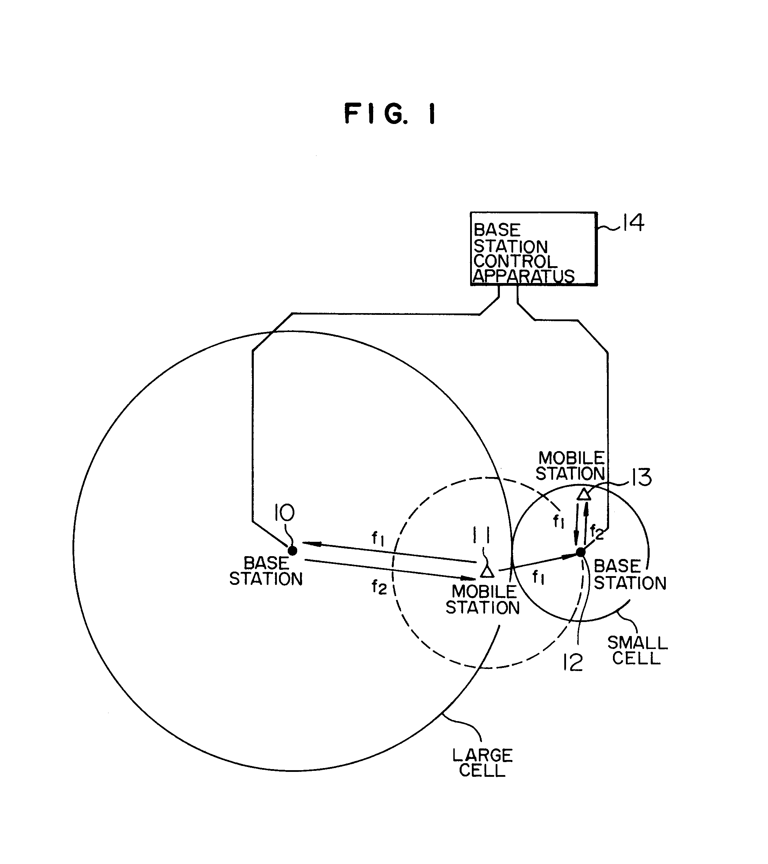

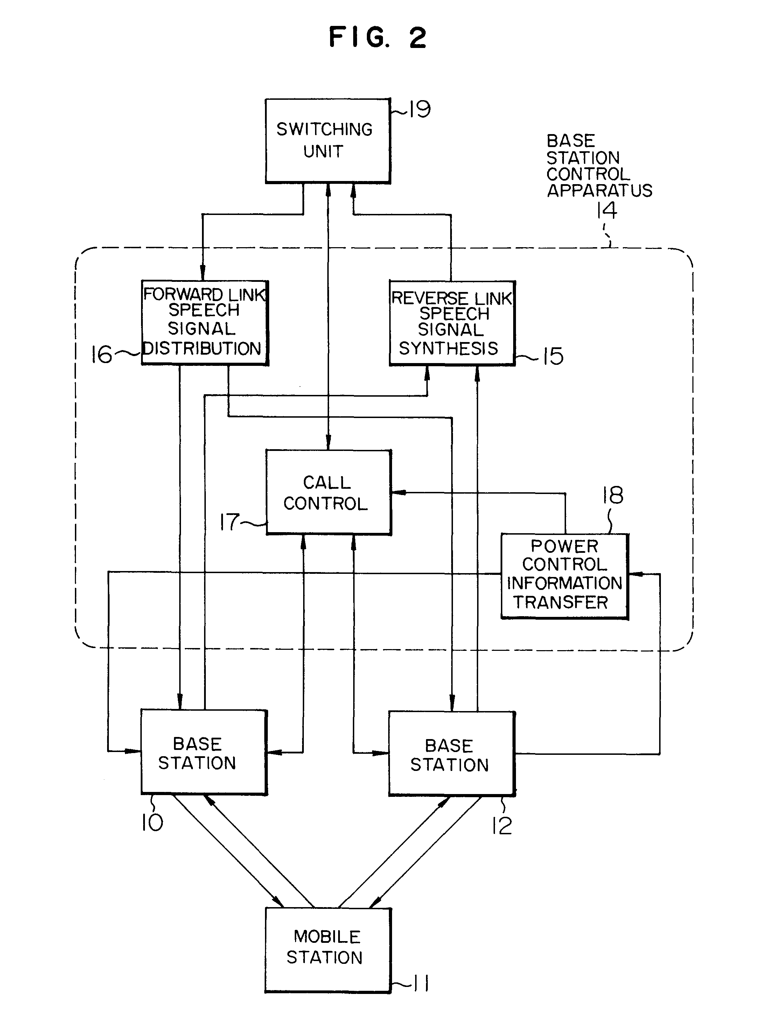

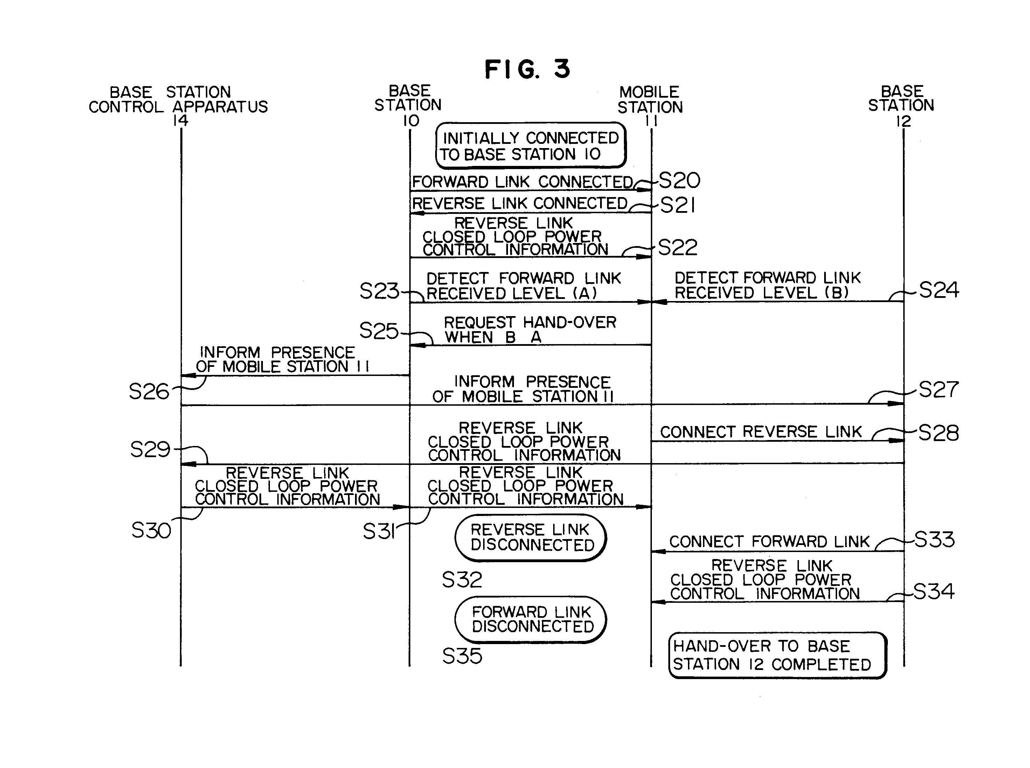

Fig. 1 schematically shows an arrangement of base and mobile stations in an embodiment of the mobile radio communication system according to the present invention, Fig. 2 is a block diagram of the mobile radio communication system embodying the present invention, and Fig. 3 is a signal sequence chart of the operation of the mobile radio communication system embodying the present invention.

Referring to Figs. 1 and 2, a mobile station 11 is making radio communication with a base station 10 having a large cellular radius, and a frequency f1 is allocated to a reverse link from the mobile station 11 to the base station 10, while another frequency f2 is allocated to a forward link from the base station 10 to the mobile station 11. On the other hand, another mobile station 13 is making radio communication with another base station 12 having a small cellular radius, and similarly the frequency f1 is allocated to a reverse link from the mobile station 13 to the base station 12, while the frequency f2 is allocated to a forward link from the base station 12 to the mobile station 13. A base station control apparatus 14 provided for centralized control of adjacent base stations including the base stations 10 and 12 includes reverse link speech signal synthesizer means 15 for synthesizing reverse link speech signals from the base stations 10 and 12, forward link speech signal distributor means 16 for distributing forward link speech signals to the base stations 10 and 12, call control means 17 for controlling calls to the base stations 10 and 12, and power control information transfer means 18 for transferring power control information from the base station 12. A switching unit 19 is connected to the reverse link speech signal synthesizer means 15, the forward link speech signal distributor means 16 and the call control means 17.

The operation of the mobile radio communication system of the present invention comprising the base station control apparatus 14 having the structure shown in Fig. 2 will now be described by reference to Fig. 3. In steps S20 and S21, the base station 10 is initially connected to the mobile station 11 through both the reverse link and the forward link. In a step S22, the power of radio waves transmitted through the reverse link is controlled on the basis of transmission power control information included in the forward link. In steps S23 and S24, the mobile station 11 continuously detects the level A of the power received from the adjacent base station 10 through the forward link and the level B of the power received from the adjacent base station 12 through the forward link. When the level B of the power received from the base station 12 through the forward link exceeds the level A of the power received from the base station 10 through the forward link, a hand-over request requesting hand-over of the mobile station 11 from the base station 10 to the base station 12 is generated in a step S25. In steps S26 and S27, the base station 10 informs the base station 12 of the presence of the mobile station 11 through the call control means 17 in the base station control apparatus 14. In a step S28, the reverse link (the frequency f1) of the mobile station 11 is connected to the base station 12 in response to a control signal supplied from the call control means 17. Under the above condition, transmission power control information is transferred from the base station 12 to the mobile station 11 through the power control information transfer means 18 in the base station control apparatus 14 and through the base station 10 in steps S29, S30 and S31. In a step S32, the power transmitted from the mobile station 11 through the reverse link is maintained at a minimum required level sufficient for the operation of the base station 12 according to the received transmission power control information, and the base station 10 acts to disconnect the reverse link between it and the mobile station 11 in response to a control signal supplied from the call control means 17. Then, in steps S33 and S34, the forward link of the base station 12 is connected to the mobile station 11 in response to a control signal supplied from the call control means 17, and the base station 12 transmits reverse link closed loop power control information to the mobile station 11. Then, in a step S35, the base station 10 disconnects the forward link between it and the mobile station 11 in response to a control signal supplied from the call control means 17.

Thus, according to the present invention, at the time of hand-over of the mobile station from the base station having the large cellular radius to the base station having the small cellular radius, the reverse link of the mobile station is connected to the base station having the small cellular radius under control of the call control means in the base station control apparatus, and the power control information is transferred from the base station having the small cellular radius to the mobile station through the power control information transfer means in the base station control apparatus and through the base station having the large cellular radius. Therefore, the level of the power transmitted from the mobile station can be reduced to a minimum, and the possibility of interference of the transmission power with other paths can also be minimized.

It is apparent that the present invention can be similarly effectively applied to a mobile radio communication system including a plurality of base stations having a large cellular radius and a plurality of base stations having a small cellular radius.

It will be apparent from the foregoing description of the preferred embodiment of the mobile radio communication system according to the present invention that, at the time of hand-over of the mobile station from the base station having the large cellular radius to the base station having the small cellular radius, the reverse link of the mobile station is connected to the base station having the small cellular radius under control of the call control means in the base station control apparatus, and the power control information is transferred from the base station having the small cellular radius to the mobile station through the power control information transfer means in the base station control apparatus and through the base station having the large cellular radius. Therefore, the level of the power transmitted from the mobile station can be reduced to a minimum, and the possibility of interference of the transmission power with other paths can also be minimized.

## Claims

1. A mobile radio communication system comprising base station control means (14) incorporated for the purpose of centralized control of a plurality of adjacent base stations including a base station (10) having a large cellular radius and another base station (12) having a small cellular radius, said base station control means (14) acting, at the time of hand-over of a mobile station (11) from said base station (10) having the large cellular radius to said base station (12) having the small cellular radius, to inform said base station (12) having the small cellular radius of the presence of said mobile station (11) and to connect a reverse link of said mobile station (11) to said base station (12) having the small cellular radius before connecting a forward link of said mobile station (11) to said base station (12), and said base station control means (14) forming a closed loop together with said mobile station (11), said base station (10) having the large cellular radius and said base station (12) having the small cellular radius to effect closed loop control of said mobile station (11) so as to suppress the output power of radio waves transmitted from said mobile station (11) to a minimum required level sufficient for the operation of said base station (12) having the small cellular radius, whereby the output power of radio waves transmitted from said mobile station (11) is reduced to a minimum, and the possibility of interference of the transmission power with other paths is minimized.

2. A mobile radio communication system comprising base station control means (14) incorporated for the purpose of centralized control of a plurality of adjacent base stations including a base station (10) having a large cellular radius and another base station (12) having a small cellular radius, said base station control means (14) including call control means (17) for informing, at the time of hand-over of a mobile station (11) from said base station (10) having the large cellular radius to said base station (12) having the small cellular radius, said base station (12) having the small cellular radius of the presence of said mobile station (11) and also acting to connect and disconnect reverse links and forward links of said plural adjacent base stations, and power control information transfer means (18) for transferring power control information from said base station (12) having the small cellular radius to said base station (10) having the large cellular radius, said call control means (17) connecting a reverse link of said mobile station (11) to said base station (12) having the small cellular radius before connecting a forward link of said mobile station (11) to said base station (12), and said call control means (17) forming a closed loop together with said mobile station (11), said base station (12) having the small cellular radius, said power control information transfer means (18) and said base station (10) having the large cellular radius to effect closed loop control of said mobile station (11) so as to suppress the output power of radio waves transmitted from said mobile station (11) to a minimum required level sufficient for the operation of said base station (12) to which said mobile station (11) is handed over, whereby the output power of radio waves transmitted from said mobile station (11) is reduced to a minimum, and the possibility of interference of the transmission power with other paths is minimized.

3. A mobile radio communication system according to Claim 2, wherein said base station control means (14) further includes reverse link speech signal synthesizer means (15) for synthesizing reverse link speech signals transmitted from said adjacent base stations and forward link speech signal distributor means (16) for distributing forward link speech signals transmitted to said adjacent base stations.
